Europäisches Patentamt

European Patent Office

Office européen des brevets

(11) Numéro de publication: **0 173 786**
**B1**

# (12) FASCICULE DE BREVET EUROPÉEN

(45) Date de publication du fascicule du brevet:
19.04.89

(51) Int. Cl.⁴: **B 23 H 7/08**

(21) Numéro de dépôt: **84810430.3**

(22) Date de dépôt: **04.09.84**

(54) Procédé et machine pour le découpage par étincelage érosif.

(43) Date de publication de la demande:
12.03.86 Bulletin 86/11

(45) Mention de la délivrance du brevet:
19.04.89 Bulletin 89/16

(84) Etats contractants désignés:
DE FR GB

(56) Documents cité:
CH-A-645 831
GB-A-2 059 324

(73) Titulaire: **CHARMILLES TECHNOLOGIES SA, 109, rue de Lyon, CH- 1203 Genève (CH)**

(72) Inventeur: **Briffod, Jean, "Les Carlines", F-Luçinges (Haute- Savoie) (FR)**

(74) Mandataire: **Ardin, Pierre, PIERRE ARDIN & CIE 22, rue du Mont- Blanc Case postale 60, CH- 1211 Genève 1 (CH)**

## Description

L'invention a pour objet un procédé pour découper par étincelage érosif une électrode-pièce au moyen d'une électrode-outil, en forme de fil, selon lequel l'électrode-fil est soumise à un traitement préparatif avant de parvenir à la zone d'usinage.

Il a déjà été proposé dans le brevet GB-A-2 059 324 d'augmenter la vitesse de découpage en utilisant un fil dont le revêtement a été oxydé par un traitement thermique.

Cependant, les avantages de cette technique ne sont pas entièrement exploités du fait que le courant admissible dans le fil, sans risque de rupture du fil, et par conséquent la vitesse d'usinage diminuent avec la traction exercée sur ce fil, cette traction étant nécessaire pour éviter la déformation du fil dans la zone d'usinage.

L'invention a pour but de permettre encore une augmentation du courant et de la vitesse d'usinage.

A cet effet, selon l'invention, on prépare l'électrode-outil avant de par venir à la zone d'usinage par un procédé comprenant un traitement thermique, en atmosphère oxydante et à une température d'au moins 600°C, d'un fil portant un revêtement comprenant du zinc ou du cadmium, pour revêtir ce fil d'une pellicule d'un oxyde de l'un de ces métaux, caractérisé en ce que l'on combine le traitement thermique du fil avec un écrouissage subséquent de ce fil, la réduction de la section du fil étant d'au moins 20 % en surface.

On a observé qu'en effectuant un écrouissage d'un fil à travers plusieurs filières, ce fil présentant un revêtement de zinc oxydé par un traitement thermique, on pouvait non seulement augmenter la traction exercée sur le fil dans la zone d'usinage, mais aussi augmenter la vitesse d'usinage.

Ce résultat surprenant pourrait provenir d'un changement de structure du revêtement du fil au cours de l'écrouissage.

Le dissin annexé représente schématiquement et à titre d'exemple, une forme d'exécution d'une machine permettant la mise en oeuvre du procédé selon l'invention

La figure 1 est un schéma de cette machine.

La figure 2 est un diagramme des résultats obtenus.

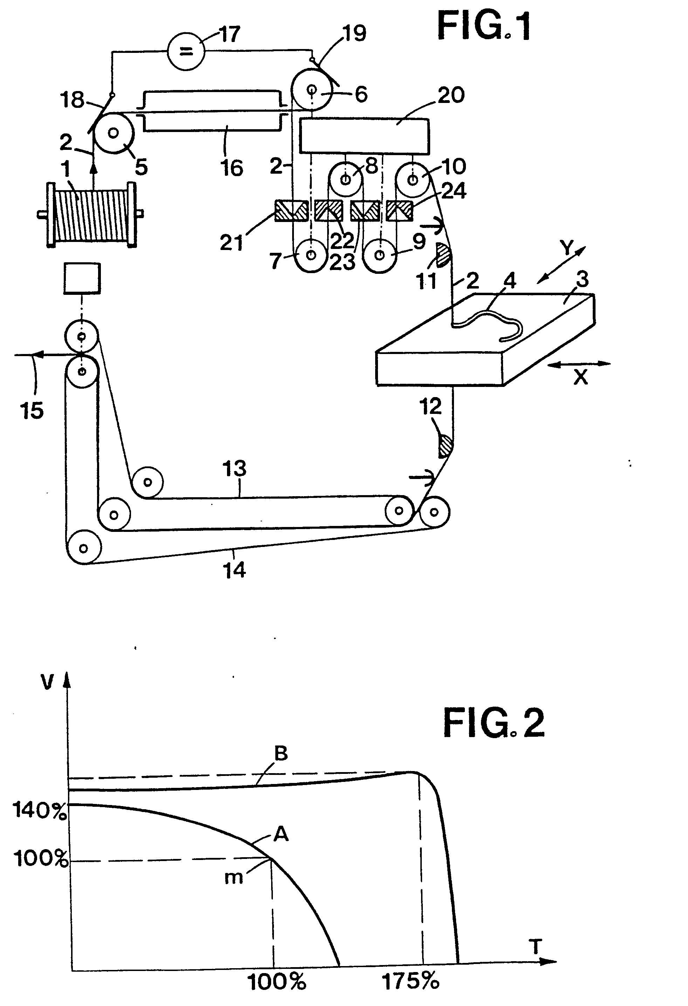

La machine représentée à la figure 1 comprend une bobine 1 chargée d'un fil métallique 2, par exemple en cuivre, portant un revêtement de zinc ou de cadmium.

Ce fil constitue une électrode filiforme destinée au découpage d'une pièce 3 par étincelage érosif des moyens connus en eux-mêmes permettent de déplacer la pièce 3 selon les directions x et y obtenir la forme désirée de la fente 4 découpée dans la pièce 3.

Le fil 2 débité de la bobine 1 passe sur une série de poulies 5 à 10 puis sur deux dispositifs de guidage 11 et 12 fixant sa trajectoire dans la zone d'usinage de la pièce 3. Après le dispositif de guidage 12, le fil 2 est entraîné entre deux courroies sans fin 13 et 14 pour être déchargé en 15 dans un dispositif de récupération non représenté.

Entre les poulies 5 et 6, le fil traverse une enceinte 16 dans laquelle il est chauffé par un courant électrique fourni par une source 17 d'énergie électrique, ce courant étant amené aux poulies 5 et 6 par des contacts frottants 18 et 19.

L'intensité du courant est réglée par des moyens non représentés de façon à obtenir une température du fil d'au moins 600°.

A cette température le revêtement de zinc ou de cadmium s'oxyde au contact de l'air.

Il est avantageux que la portion de fil comprise entre les poulies 5 et 6 soit soumise à une traction provoquant un étirage du fil, par exemple en exerçant un couple de freinage sur la poulie 5, tandis que les poulies 6 à 10, sont entraînées en répondant par un mécanisme 20.

Le fil traverse une série de 4 filières 21, 22, 23 et 24 disposées successivement entre les poulies 6, 7, 8, 9 et 10.

Bien entendu, le diamètre des filières diminue successivement et le mécanisme d'entraînement est conçu pour que la vitesse périphérique des .poulies 7 à 10 augmente progressivement en fonction de l'allongement auquel le fil est soumis lors de son passage dans chaque filière.

De cette façon, à la sortie des filières, le fil a subi un écrouissage accompagné d'une réduction de sa section d'au moins 20 %.

La figure 2 illustre les avantages du procédé selon l'invention.

La courbe A illustre le rapport liant la vitesse d'usinage V et la traction mécanique T exercée dans la zone d'usinage sur le fil 2.

On a indiqué la référence 100 % pour le point m pour lequel le rapport optimum entre l'intensité du courant que l'on peut faire passer et la traction est exercée sur le fil pour obtenir un découpage suffisamment précis.

Cette courbe A illustre bien le rapport qui existe entre le courant électrique maximum que l'on peut faire passer dans le fil sans qu'il y ait rupture, en fonction de la traction exercée sur ce fil.

La courbe B montre que l'on peut exercer une traction jusqu'à 175 % plus élevée et utiliser un courant d'usinage augmenté de 40 % par rapport à la courbe A, lorsque le fil à été écroui par son passage dans les quatre filières.

Les deux courbes se rapportent à l'utilisation d'un fil recouvert d'une couche d'oxyde de zinc et présentant un diamètre de 0,185 millimètre et à subit une diminution de 26 % en diamètre.

Bien entendu, on peut apporter différentes modifications à l'exemple décrit. Ainsi l'opération d'écrouissage pourrait aussi se faire par étirage à froid, par laminage à froid ou par une combinaison de ces opérations. On pourrait aussi compléter ces opérations par un calibrage du fil écroui au moyen d'une seule filière.

De plus, la dernière filière de la figure 1 pourrait faire office de guide.

Au lieu d'utiliser un fil métallique recouvert de zinc ou de cadmium pur, on peut prévoir un fil dont le revêtement est constitué par un alliage comprenant au moins 50 % de zinc ou de cadmium. Après l'oxydation qui résulte du chauffage du fil dans une atmosphère contenant de l'oxygène, le revêtement est alors recouvert d'une pellicule contenant une certaine proportion d'oxyde de zinc ou de cadmium, cet oxyde subissant un écrouissage lors de son passage dans la ou les filières d'étirage.

**Revendications**

1. Procédé de préparation d'une électrode-outil en forme de fil (2) pour découper par étincelage érosif une électrode-pièce (3), comprenant un traitement thermique, en atmosphère oxydante et à une température d'au moins 600°C, d'un fil (2) portant un revêtement comprenant du zinc ou du cadmium, pour revêtir ce fil d'une pellicule d'un oxyde de l'un de ces métaux, cactérisé en ce que l'on combine le traitement thermique du fil (2) avec un écrouissage subséquent de ce fil, la réduction de la section du fil étant d'au moins 20 % en surface.

2. Procédé selon la revendication 1, caractérisé en ce que l'on fait passer le fil (2) dans au moins une filière (21 - 24) pour obtenir son écrouissage.

3. Electrode-outil pour découper par étincelage érosif une électrode-pièce (3), constituée par un fil (2) portant un revêtement de zinc ou de cadmium, lui-même revêtu d'une pellicule comprenant un oxyde de l'un de ces métaux, caractérisée en ce qu'elle est obtenue par combinaison d'un traitement thermique oxydant, à une température d'au moins 600°C, avec un écrouissage subséquent pour réduire la section du fil d'au moins 20 % en surface.

4. Utilisation d'une électrode-outil en forme de fil (2) pour découper par étincelage érosif une électrode-pièce (3), ce fil portant un revêtement comprenant du zinc ou du cadmium, où l'on fait passer le fil (2) dans une zone (16) destinée à le chauffer à au moins 600°C en présence de l'air, puis dans au moins une filière (21 - 24) agencée de façon à permettre la réduction de la section du fil d'au moins 20 % en surface, le fil (2) écroui passant alors dans une zone d'usinage et découpant par etincelage érosif l'électrode-pièce.

**Patentansprüche**

1. Verfahren zur Herstellung einer drahtförmigen Werkzeugelektrode zum funkenerosiven Schneiden einer Werkstückelektrode (3), mit einer bei oxydierender Atmosphäre und einer Temperatur von mindestens 600°C erfolgenden thermischen Behandlung eines Drahtes (2), der einen Zink oder Kadmium aufweisenden Überzug hat, um diesen Draht mit einer Hülle eines Oxyds eines dieser Metalle zu versehen, dadurch gekennzeichnet, daß die thermische Behandlung des Drahtes (2) mit einer nachfolgenden wenigstens 20 %-igen oberflächenmäßigen Querschnittsverringerung dieses Drahts verbunden wird.

2. Verfahren nach Anspruch 1, dadurch gekennzeichnet, daß der Draht (2) zum Erzielen seiner Querschnittsverringerung wenigstens eine Ziehdüse (21 bis 24) durchläuft.

3. Werkzeugelektrode zum funkenerosiven Schneiden einer Werkstückelektrode (3), gebildet durch einen Draht (2), der einen Überzug aus Zink oder Kadmium hat, welcher selbst eine Hülle aus einem Oxyd eines dieser Metalle aufweist, dadurch gekennzeichnet, daß sie durch die Verbindung einer thermischen oxydierenden Behandlung bei einer Temperatur von wenigstens 600°C mit einer nachfolgenden wenigstens 20 %-igen oberflächenmäßigen Querschnittsverringerung erzielt ist.

4. Verwendung einer drahtförmigen Werkzeugelektrode zum funkenerosiven Schneiden einer Werkstückelektrode (3), wobei der Draht (2) einen Zink oder Kadmium enthaltenden Überzug trägt, wo man den Draht (2) eine Zone (16) zum Erhitzen auf wenigstens 600°C bei Luftgegenwart und dann wenigstens eine Ziehdüse (21 bis 24) zum wenigstens 20 %-igen oberflächenmäßigen Verringern des Drahtquerschnitts durchlaufen läßt, wonach der querschnittsverringerte Draht (2) eine das Elektrodenwerkstück funkenerosiv schneidende Bearbeitungszone durchläuft.

**Claims**

1. A method of preparing an electrode tool in the form of a wire (2) for electroerosion cutting of an electrode piece (3), comprising heat treatment, in an oxidizing atmosphere and at a temperature of at least 600°C, of a wire (2) having a coating comprising zinc or cadmium, to coat this wire with a film of an oxide of one of these metals, characterized in that the heat treatment of the wire (2) is combined with a subsequent reduction of its section of at least 20 % in surface area.

2. A method according to claim 1, characterized in that the wire (2) is made to pass through at least one die plate (21 - 24) to be cold drawn.

3. An electrode tool for electroerosion cutting of an electrode piece (3), consisting of a wire (2) having a coating of zinc or cadmium, itself coated with a film comprising an oxide of one of these metals, characterized in that it is obtained by combining oxidizing heat treatment, at a temperature of at least 600°C, with subsequent working to reduce the section of the wire by at least 20 % in surface area.

4. Use of an electrode tool in the form of a wire (2) for electroerosion cutting of an electrode piece (3), this wire having a coating comprising zinc or cadmium, where the wire (2) is passed through a zone (16) for heating it to at least 600°C in the presence of air, then through at least one die plate (21 - 24) arranged so as to permit the reduction in section of the wire by at least 20 % in surface area, the worked wire (2) then passing through a machining zone and cutting the electrode piece by electroerosion.

# FIG.1

# FIG.2